# EUROPÄISCHE PATENTSCHRIFT

(11) **EP 3 253 917 B1**
(45) Veröffentlichungstag und Bekanntmachung des Hinweises auf die Patenterteilung: **21.11.2018**
(21) Anmeldenummer: 15828488.5
(22) Anmeldetag: 16.12.2015
(51) Int. Cl.: D21B 1/32, D21D 99/00

(54) **FASERSTOFFBEHANDLUNG**
TREATMENT OF FIBROUS MATERIAL
TRAITEMENT DE MATIÈRE FIBREUSE

(30) Priorität: 05.02.2015 DE 102015201996
(43) Veröffentlichungstag der Anmeldung: 13.12.2017
(73) Patentinhaber: Voith Patent GmbH, 89522 Heidenheim (DE)
(72) Erfinder: BRITZ, Herbert, 88276 Berg (DE); PESCHL, Alexander, 88214 Ravensburg (DE); ALBRECHT, Falk, 88410 Bad Wurzach (DE); VOIRON, Antje, 88368 Bergatreute (DE)
(86) Internationale Anmeldenummer: PCT/EP2015/079970
(87) Internationale Veröffentlichungsnummer: WO 2016/124285

(56) Entgegenhaltungen:
- EP-A1- 1 262 593
- DE-A1-102012 209 457

## Beschreibung

Die Erfindung betrifft ein Verfahren zur Behandlung eines zumindest teilweise aus Altpapier gebildeten Faserstoffsuspensionsstromes wenigstens umfassend eine Auflösung sowie zumindest eine folgende erste Fraktionier-Stufe zur Bildung wenigstens einer Lang- und zumindest einer Kurzfaserfraktion, wobei wenigstens die Kurzfaserfraktion durch zumindest eine Flotations-Stufe geführt wird.

In der Auflösungs-Stufe erfolgt die Auflösung der Fasern sowie des Altpapiers. Daran schließen sich mehrere Prozessschritte zur Behandlung der Faserstoffsuspension an, bis die Faserstoffsuspension die geforderten Parameter erfüllt und an eine Maschine zur Herstellung einer Faserstoffbahn übergeben werden kann.

Bei der Wiederaufbereitung von Altpapier für Verpackungspapiere ist es üblich, den Gesamtfaserstoffstrom zu fraktionieren und die sich dabei ergebenden Teilfraktionen gesondert weiter zu behandeln. Ein derartiges Verfahren ist beispielsweise aus DE 10 2012 209 457 A1 bekannt.

Dabei müssen in erheblichen Umfang Wachse, Stickies und andere hydrophobe Partikel entfernt oder zumindest so bearbeitet werden, dass sie bei der Faserstoffbahn nicht stören. Bislang wird hierfür hauptsächlich die Dispergierung verwendet. Dies ist allerdings sehr energieintensiv und führt lediglich zur Zerkleinerung der Störstoffe mit der Gefahr der Reagglomeration, aber nicht zu deren Entfernung.

Mit Hilfe der Flotation können zwar hydrophobe Störstoffe abgeschieden werden, allerdings ist dies mit erheblichen Faserverlusten verbunden Ein derartiges Verfahren ist beispielsweise aus der EP 1 262 593 A1 bekannt.

Die Aufgabe der Erfindung ist es daher die Qualität der Faserstoffsuspension bei möglichst geringen Faserverlusten zu verbessern.

Erfindungsgemäß wurde die Aufgabe durch die Kombination der Merkmale gemäß Anspruch 1 gelöst.

Über die Flotation lassen sich hydrophobe Störstoffe sehr energieeffizient entfernen. Die damit verbundenen Faserverluste werden durch die Behandlung des Rejekts der Flotation in einer Trenn-Stufe und die Rückführung des Accepts der Trenn-Stufe in den Prozess wesentlich reduziert.

Daher sollte das Rejekt wenigstens einer Flotations-Stufe einer Langfaserfraktion und/oder das Rejekt wenigstens einer Flotations-Stufe einer Kurzfaserfraktion in eine Trenn-Stufe geführt werden.

Als Trenn-Stufen kommen Vorrichtungen infrage, mit deren Hilfe wenigstens ein Teil der Fasern aus dem Rejekt der Trenn-Stufe mit möglichst geringem Aufwand abgetrennt werden kann. Daher sollte die Trenn-Stufe zumindest einen Sortierer, Wäscher o.ä. und/oder eine Flotationsvorrichtung umfassen.

Besonders einfach gestalten sich das Verfahren und die entsprechende Vorrichtung, wenn die Fraktionier-Stufe nur eine Lang- und nur eine Kurzfaserfraktion bildet. Allerdings kann in Abhängigkeit von den Qualitäten der bereitgestellten Faserrohstoffe, insbesondere Altpapiere sowie den Anforderungen an die herzustellende Faserstoffbahn auch eine Fraktionierung in drei und mehr Fraktionen von Vorteil sein. Die Fraktionen unterscheiden sich im Wesentlichen hinsichtlich der Qualität, insbesondere der Länge der Fasern und des Anteils an Störstoffen.

Während die Langfaserfraktion überwiegend lange Fasern, große Störstoffe und wenig kleine Störstoffe beinhaltet, ist eine Kurzfaserfraktion durch einen hohen Anteil an kurzen Fasern und Störstoffen, wie Asche, Stickies und Wachs gekennzeichnet. Bei anderen Fraktionen kann sich der Anteil an kleinen und großen Störstoffen und langen bzw. kurzen Fasern zwischen den entsprechenden Werten der Lang- und Kurzfaserfraktion befinden.

Wegen des geringen Anteils an kleinen, hydrophoben Störstoffen in der Langfaserfraktion kann zumindest ein Teil des, vorzugsweise das gesamte Accept wenigstens einer Trenn-Stufe ohne wesentliche Beeinträchtigung der Qualität in eine Langfaserfraktion geführt werden.

Von Vorteil ist es allgemein, wenn wenigstens eine, vorzugsweise alle Langfaserfraktionen durch jeweils eine Dispergier-Stufe geführt werden. Über die Dispergierung werden die Störstoffe zerkleinert, was deren schädliche Wirkung minimiert.

Daher sollte zumindest ein Teil des, vorzugsweise das gesamte Accept der Trenn-Stufe zu einer Langfaserfraktion vor deren Dispergier-Stufe geführt werden.

Zur Steigerung der Qualität können wenigstens eine, vorzugsweise alle Langfaserfraktionen jeweils durch eine Flotations-Stufe geführt werden.

In diesem Fall ist es vorteilhaft, wenn zumindest ein Teil des, vorzugsweise das gesamte Accept der Trenn-Stufe zu einer Langfaserfraktion vor deren Flotations-Stufe geführt und somit ein zweites Mal flotiert wird. Dies vermindert die Belastung der Langfaserfraktion durch das Accept erheblich.

Zwecks Minimierung des Aufwandes kann hierbei auf eine üblicherweise folgende Dispergier-Stufe verzichtet werden.

Um den Aufwand, insbesondere den Energiebedarf zu begrenzen, sollten zumindest eine, vorzugsweise alle Kurzfaserfraktionen keine Dispergier-Stufe durchlaufen. Störstoffe, die die Flotations-Stufe der Kurzfaserfraktion passieren, beeinträchtigen die Qualität der Kurzfaserfaserfraktion nur in akzeptablen Umfang.

Alternativ oder ergänzend zur Zuführung des Accepts in die Langfaserfraktion kann es ebenso vorteilhaft sein, wenn zumindest ein Teil des, vorzugsweise das gesamte Accept der Trenn-Stufe zu einer Kurzfaserfraktion, vorzugsweise vor deren Flotations-Stufe geführt wird.

Auch hier führt dies zu einer Minderung der Faserverluste und durch die nochmalige Flotation zu einer umfassenderen Ausschleusung von Störstoffen.

Vorteile im Hinblick auf die Qualität der Fraktionen ergeben sich, wenn Lang- und Kurzfaserfraktionen jeweils eine Flotation-Stufe durchlaufen.

Hierbei ist es besonders vorteilhaft, wenn das Rejekt wenigstens einer Flotations-Stufe einer Langfaserfraktion in eine Trenn-Stufe und das Accept dieser Trenn-Stufe gemeinsam mit dem Rejekt einer Flotations-Stufe einer Kurzfaserfraktion direkt zur Langfaserfraktion, vorzugsweise vor deren Flotations-Stufe geführt wird.

Alternativ ergeben sich ebenso Vorteile, wenn das Rejekt wenigstens einer Flotations-Stufe einer Kurzfaserfraktion und das Rejekt zumindest einer Flotations-Stufe einer Langfaserfraktion in eine gemeinsame Trenn-Stufe geführt wird.

In beiden Fällen wird nur eine Trenn-Stufe benötigt.

Nachfolgend soll die Erfindung an mehreren Ausführungsbeispielen
näher erläutert werden.

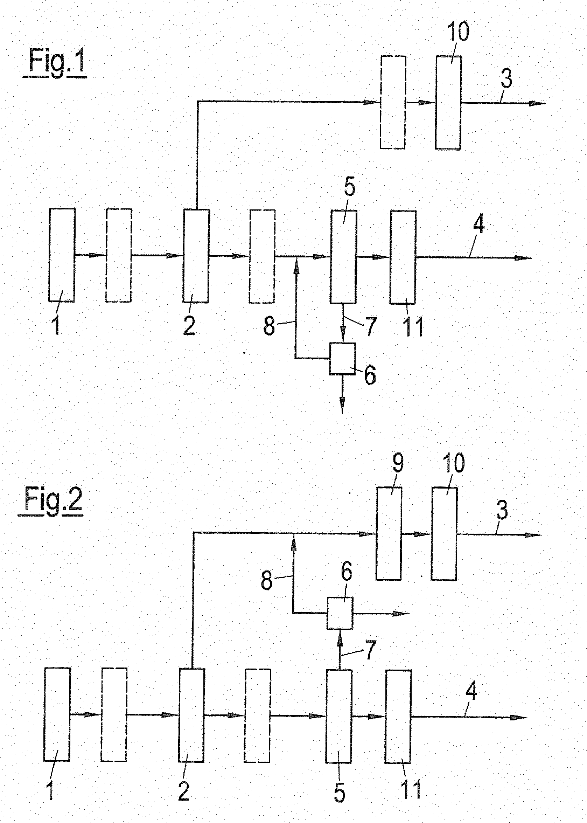

In der beigefügten Zeichnung zeigen die Figuren 1 bis 4 unterschiedliche Gestaltungen einer erfindungsgemäßen Prozessanordnung.

Gemeinsam ist bei allen Ausführungen, dass die Faserstoffsuspension nach der Auflösung 1 des Altpapiers sowie eventuell hinzugegebener Frischfasern unter Zugabe von Wasser, beispielsweise in einem Pulper zu einer Fraktionier-Stufe 2 geführt wird.

Zwischen der Auflösung 1 bzw. der Auflösungs-Stufe und der ersten Fraktionier-Stufe 2 erfolgt die Reinigung des Faserstoffsuspensionsstromes mittels einer oder mehrerer Reinigungs-Stufen zum Beispiel unter Nutzung eines Zentrifugalfeldes, d.h. in Form von Hydrozyklonen. Dies entlastet und schützt diese Fraktionier-Stufe 2 oft bereits in ausreichendem Maße.

In der Fraktionier-Stufe 2 erfolgt dann eine Aufteilung des Faserstoffsuspensionsstromes in eine Langfaserfraktion 3 und eine Kurzfaserfraktion 4. Für die Fraktionier-Stufe 2 eignen sich bekannte Sortierer.

Während die Langfaserfraktion 3 einen hohen Anteil an langen Fasern, großen Störstoffen und wenig kleinen Störstoffen aufweist, ist bei der Kurzfaserfraktion 4 der Anteil an kurzen Fasern und kleinen, hydrophoben Störstoffen hoch.

Anschließend durchläuft zumindest die Kurzfaserfraktion 4 wenigstens eine Flotations-Stufe 5 sowie nachfolgend eine Eindick-Stufe 11 zur Erhöhung der Stoffdichte. Die Flotation der Langfaserfraktion ist in Figur 1 nicht gezeigt.

Über die Flotation können Asche und hydrophobe Störstoffe aus der Faserstoffsuspension als Rejekt 7 ausgeschleust werden. Die damit erreichbare Qualität genügt oft bereits, so dass auf eine nachfolgende Dispergierung der Kurzfaserfraktion 4, eventuell sogar der Langfaserfraktion 3 verzichtet werden kann, was Kosten und Energie spart.

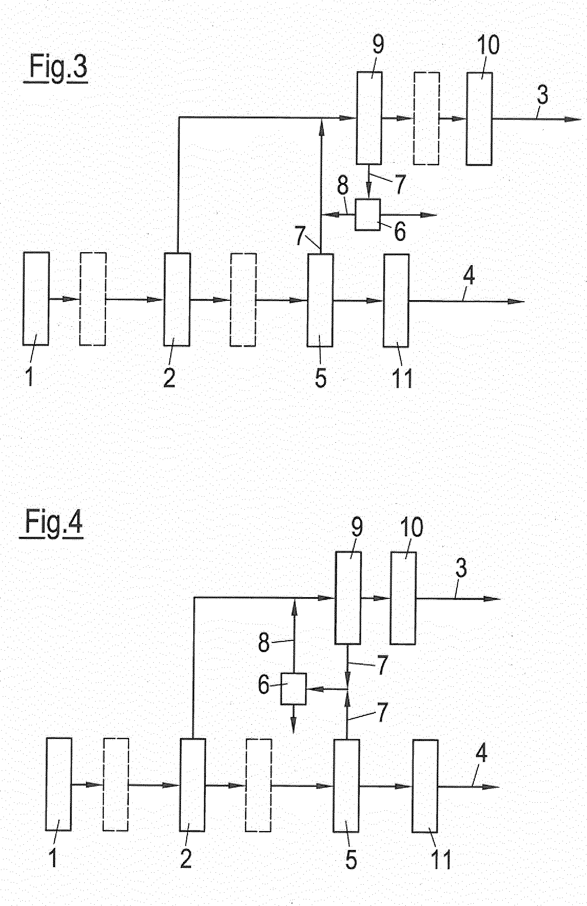

Um die mit der Flotation verbundenen Faserverluste zu minimieren, wird das Rejekt 7 der Flotations-Stufe 5 der Kurzfaserfraktion 4 bei den Lösungen gemäß Figur 1,2 und 4 in eine Trenn-Stufe 6 und bei Figur 3 direkt in die Langfaserfraktion 3 geführt.

In der Trenn-Stufe 6 soll ein möglichst großer Teil der Fasern des Rejekts 7 der Flotation als Accept 8 abgetrennt und im Prozess wiederverwendet werden.

Hierzu eignen sich insbesondere bekannte Sortierer, Wäscher o.ä. oder gar Flotationsvorrichtungen.

Bei Figur 1 wird das Accept 8 dieser Trenn-Stufe 6 dann wieder der Kurzfaserfraktion 4 vor deren Flotations-Stufe 5 zugeführt, so dass das Accept ein zweites Mal flotiert wird. Die Langfaserfraktion 3 wird bei dieser Variante zumindest durch eine Dispergier-Stufe 10 geleitet, welche die Störstoffe, vor allem die nicht in der Flotation ausgesonderten Hydrophobics zerkleinert.

Im Gegensatz hierzu gelangt bei Figur 2 das Accept 6 der Trenn-Stufe 6 in die Langfaserfraktion 3 und zwar vor eine Flotations-Stufe 9 dieser Langfaserfraktion 3, so dass dieses Accept 8 auch hier ein zweites Mal flotiert wird. Nach der Flotations-Stufe 9 wird die Langfaserfraktion 3 dann zur Dispergier-Stufe 10 geleitet.

Auch bei Figur 4 werden beide Fraktionen 3,4 durch jeweils eine Flotation 5,9 geführt. Allerdings wird hier das Reject 7 beider Flotationen 5,9 gemeinsam in eine Trenn-Stufe 6 geleitet. Das Accept 8 dieser Trenn-Stufe 6 gelangt dann ebenso in die Langfaserfraktion 3 vor deren Flotations-Stufe 9.

Zwar besitzt die in Figur 3 gezeigte Anordnung ebenfalls jeweils eine Flotations-Stufe 5,9 für die Lang- 3 und die Kurzfaserfraktion 4, aber hier wird nur das Rejekt 7 der Flotations-Stufe 9 der Langfaserfraktion 3 in eine Trenn-Stufe 6 geführt. Das Accept 8 dieser Trenn-Stufe 6 gelangt dann gemeinsam mit dem Rejekt 7 der Flotations-Stufe 5 der Kurzfaserfraktion 4 in die Langfaserfraktion 3 und zwar vor deren Flotations-Stufe 9.

## Patentansprüche

1. Verfahren zur Behandlung eines zumindest teilweise aus Altpapier gebildeten Faserstoffsuspensionsstromes wenigstens umfassend eine Auflösung (1) sowie zumindest eine folgende erste Fraktionier-Stufe (2) zur Bildung wenigstens einer Lang- (3) und zumindest einer Kurzfaserfraktion (4), **dadurch gekennzeichnet, dass** die zumindest Kurzfaserfraktion (4) durch zumindest eine Flotations-Stufe (5) geführt wird, wenigstens eine Langfaserfraktion (3) durch eine Flotations-Stufe (9) geführt wird und das Rejekt (7) wenigstens einer Flotations-Stufe (5,9) in eine Trenn-Stufe (6) und deren Accept (8) zumindest teilweise in wenigstens eine der Fraktionen (3,4) geführt wird.

2. Verfahren nach Anspruch 1, **dadurch gekennzeichnet, dass** zumindest ein Teil des, vorzugsweise das gesamte Accept (8) wenigstens der Trenn-Stufe (6) in eine Langfaserfraktion (3) geführt wird.

3. Verfahren nach Anspruch 1 oder 2, **dadurch gekennzeichnet, dass** wenigstens eine Langfaserfraktion (3) durch eine Dispergier-Stufe (10) geführt wird.

4. Verfahren nach Anspruch 3, **dadurch gekennzeichnet, dass** zumindest ein Teil des, vorzugsweise das gesamte Accept (8) der Trenn-Stufe (6) zu einer Langfaserfraktion (3) vor deren Dispergier-Stufe (10) geführt wird.

5. Verfahren nach einem der vorhergehenden Ansprüche, **dadurch gekennzeichnet, dass** zumindest ein Teil des, vorzugsweise das gesamte Accept (8) der Trenn-Stufe (6) zu einer Langfaserfraktion (3) vor deren Flotations-Stufe (9) geführt wird.

6. Verfahren nach einem der Ansprüche 1, 2, oder 5, **dadurch gekennzeichnet, dass** die Kurzfaserfraktion (4) und/oder die Langfaserfraktion (3) keine Dispergier-Stufe durchläuft.

7. Verfahren nach einem der vorhergehenden Ansprüche, **dadurch gekennzeichnet, dass** zumindest ein Teil des, vorzugsweise das gesamte Accept (8) der Trenn-Stufe (6) zu einer Kurzfaserfraktion (4), vorzugsweise vor deren Flotations-Stufe (5) geführt wird.

8. Verfahren nach einem der vorhergehenden Ansprüche, **dadurch gekennzeichnet, dass** das Rejekt (7) wenigstens einer Flotations-Stufe (9) einer Langfaserfraktion (3) in eine Trenn-Stufe (6) geführt wird.

9. Verfahren nach Anspruch 8, **dadurch gekennzeichnet, dass** das Rejekt (7) einer Flotations-Stufe (5) einer Kurzfaserfraktion (4) direkt zu einer Langfaserfraktion (3), vorzugsweise vor deren Flotations-Stufe (9) geführt wird.

10. Verfahren nach einem der vorhergehenden Ansprüche, **dadurch gekennzeichnet, dass** das Rejekt (7) wenigstens einer Flotations-Stufe (5) einer Kurzfaserfraktion (4) in eine Trenn-Stufe (6) geführt wird.

11. Verfahren nach einem der vorhergehenden Ansprüche, **dadurch gekennzeichnet, dass** das Rejekt (7) wenigstens einer Flotations-Stufe (5) einer Kurzfaserfraktion (4) und das Rejekt (7) zumindest einer Flotations-Stufe (9) einer Langfaserfraktion (3) in eine gemeinsame Trenn-Stufe (6) geführt wird.

12. Verfahren nach einem der vorhergehenden Ansprüche, **dadurch gekennzeichnet, dass** die Trenn-Stufe (6) zumindest einen Sortierer oder Wäscher umfasst.

13. Verfahren nach einem der vorhergehenden Ansprüche, **dadurch gekennzeichnet, dass** die Trenn-Stufe (6) zumindest eine Flotationsvorrichtung umfasst.

14. Verfahren nach einem der vorhergehenden Ansprüche, **dadurch gekennzeichnet, dass** die Fraktionier-Stufe (2) nur eine Lang- (3) und nur eine Kurzfaserfraktion (4) bildet.

## Claims

1. Method for treating a fibrous material suspension flow that is at least partially formed from waste paper, at least comprising a dissolution (1) and at least one following first fractionation stage (2) for forming at least one long-fibre fraction (3) and at least one short-fibre fraction (4),
**characterized in that**
at least one short-fibre fraction (4) is guided through at least one flotation stage (5), at least one long-fibre fraction (3) is guided through a flotation stage (9), and the rejected product (7) of at least one flotation stage (5, 9) is guided into a separation stage (6) and the accepted product (8) thereof at least partially is guided into at least one of the fractions (3, 4).

2. Method according to Claim 1, **characterized in that** at least one part of the accepted product (8), preferably the entire accepted product (8), at least of the separation stage (6), is guided into a long-fibre fraction (3).

3. Method according to Claim 1 or 2, **characterized in that** at least one long-fibre fraction (3) is guided through a dispersion stage (10).

4. Method according to Claim 3, **characterized in that** at least one part of the accepted product (8), preferably the entire accepted product (8), of the separation stage (8) is guided to a long-fibre fraction (3) upstream of the dispersion stage (10) of the latter.

5. Method according to at least one of the preceding claims, **characterized in that** at least one part of the accepted product (8), preferably the entire accepted product (8), of the separation stage (6) is guided to a long-fibre fraction (3) upstream of the flotation stage (9) of the latter.

6. Method according to one of Claims 1, 2, or 5, **characterized in that** the short-fibre fraction (4) and/or the long-fibre fraction (3) do/does not pass through a dispersion stage.

7. Method according to one of the preceding claims, **characterized in that** at least one part of the accepted product (8), preferably the entire accepted product (8), of the separation stage (6) is guided to a short-fibre fraction (4), preferably upstream of the flotation stage (5) of the latter.

8. Method according to one of the preceding claims, **characterized in that** the rejected product (7) of at least one flotation stage (9) of the long-fibre fraction (3) is guided into a separation stage (6) .

9. Method according to Claim 8, **characterized in that** the rejected product (7) of a flotation stage (5) of a short-fibre fraction (4) is guided directly to a long-fibre fraction (3), preferably upstream of the flotation stage (9) of the latter.

10. Method according to one of the preceding claims, **characterized in that** the rejected product (7) of at least one flotation stage (5) of a short-fibre fraction (4) is guided into a separation stage (6) .

11. Method according to one of the preceding claims, **characterized in that** the rejected product (7) of at least one flotation stage (5) of a short-fibre fraction (4), and the rejected product (7) of at least one flotation stage (9) of a long-fibre fraction (3), are guided into a common separation stage (6).

12. Method according to one of the preceding claims, **characterized in that** the separation stage (6) comprises at least one sorter or washer.

13. Method according to one of the preceding claims, **characterized in that** the separation stage (6) comprises at least one flotation device.

14. Method according to one of the preceding claims, **characterized in that** the fractionation stage (2) forms only one long-fibre fraction (3) and only one short-fibre fraction (4).

## Revendications

1. Procédé de traitement d'un flux de suspension de matière fibreuse formé au moins en partie de papier recyclé, comprenant au moins une désagrégation (1) ainsi que l'au moins un premier étage de fractionnement subséquent (2) pour produire au moins une fraction à fibres longues (3) et au moins une fraction à fibres courtes (4), **caractérisé en ce qu'**au moins une fraction à fibres courtes (4) est guidée à travers au moins un étage de flottation (5), au moins une fraction à fibres longues (3) est guidée à travers un étage de flottation (9) et la partie rejetée (7) d'au moins un étage de flottation (5, 9) est guidée dans un étage de séparation (6) et la partie acceptée (8) est guidée au moins en partie dans au moins l'une des fractions (3, 4).

2. Procédé selon la revendication 1, **caractérisé en ce qu'**au moins une partie, de préférence la totalité, de la partie acceptée (8), d'au moins l'étage de séparation (6), est guidée dans une fraction à fibres longues (3).

3. Procédé selon la revendication 1 ou 2, **caractérisé en ce qu'**au moins une fraction à fibres longues (3) est guidée à travers un étage de dispersion (10) .

4. Procédé selon la revendication 3, **caractérisé en ce qu'**au moins une partie, de préférence la totalité, de la partie acceptée (8) de l'étage de séparation (6) est guidée vers une fraction à fibres longues (3) avant son étage de dispersion (10) .

5. Procédé selon l'une quelconque des revendications précédentes, **caractérisé en ce qu'**au moins une partie, de préférence la totalité, de la partie acceptée (8) de l'étage de séparation (6) est guidée vers une fraction à fibres longues (3) avant son étage de flottation (9).

6. Procédé selon l'une quelconque des revendications 1, 2 ou 5, **caractérisé en ce que** la fraction à fibres courtes (4) et/ou la fraction à fibres longues (3) ne passent à travers aucun étage de dispersion.

7. Procédé selon l'une quelconque des revendications précédentes, **caractérisé en ce qu'**au moins une partie, de préférence la totalité, de la partie acceptée (8) de l'étage de séparation (6) est guidée vers une fraction à fibres courtes (4), de préférence avant son étage de flottation (5).

8. Procédé selon l'une quelconque des revendications précédentes, **caractérisé en ce que** la partie rejetée (7) d'au moins un étage de flottation (9) d'une fraction à fibres longues (3) est guidée dans un étage de séparation (6).

9. Procédé selon la revendication 8, **caractérisé en ce que** la partie rejetée (7) d'un étage de flottation (5) d'une fraction à fibres courtes (4) est guidée directement vers une fraction à fibres longues (3), de préférence avant son étage de flottation (9).

10. Procédé selon l'une quelconque des revendications précédentes, **caractérisé en ce que** la partie rejetée (7) d'au moins un étage de flottation (5) d'une fraction à fibres courtes (4) est guidée dans un étage de séparation (6).

11. Procédé selon l'une quelconque des revendications précédentes, **caractérisé en ce que** la partie rejetée (7) d'au moins un étage de flottation (5) d'une fraction à fibres courtes (4) et la partie rejetée (7) d'au moins un étage de flottation (9) d'une fraction à fibres longues (3) sont guidées dans un étage de séparation commun (6).

12. Procédé selon l'une quelconque des revendications précédentes, **caractérisé en ce que** l'étage de séparation (6) présente au moins un dispositif de triage ou un dispositif de lavage.

13. Procédé selon l'une quelconque des revendications précédentes, **caractérisé en ce que** l'étage de séparation (6) comprend au moins un dispositif de flottation.

14. Procédé selon l'une quelconque des revendications précédentes, **caractérisé en ce que** l'étage de fractionnement (2) forme seulement une fraction à fibres longues (3) et seulement une fraction à fibres courtes (4).
